**Europäisches Patentamt**

**European Patent Office**

**Office européen des brevets**

(19)

(11) Veröffentlichungsnummer: **0 173 265**
**B1**

(12) # EUROPÄISCHE PATENTSCHRIFT

(45) Veröffentlichungstag der Patentschrift:
03.05.89

(51) Int. Cl.⁴: **H 04 L 11/00**

(21) Anmeldenummer: **85110615.3**

(22) Anmeldetag: **23.08.85**

(54) Verfahren zum Übertragen von Datensignalen zwischen Teilnehmerstellen einer Datenvermittlungsanlage.

(30) Priorität: **29.08.84 DE 3431762**

(43) Veröffentlichungstag der Anmeldung:
**05.03.86 Patentblatt 86/10**

(45) Bekanntmachung des Hinweises auf die Patenterteilung:
**03.05.89 Patentblatt 89/18**

(84) Benannte Vertragsstaaten:
**AT CH DE IT LI NL SE**

(56) Entgegenhaltungen:
**EP-A- 0 088 310**

(73) Patentinhaber: **Siemens Aktiengesellschaft Berlin und München, Wittelsbacherplatz 2, D-8000 München 2 (DE)**

(72) Erfinder: **Dietmar, Franz, Dipl.-Ing., Edelweissstrasse 66, D-8039 Puchheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zum Übertragen von Datensignalen zwischen Teilnehmerstellen einer Datenvermittlungsanlage, wobei die betreffenden Teilnehmerstellen über eine an der Datenvermittlungsanlage über eine Mehrzahl von Übertragungskanälen angeschlossene Signalbehandlungseinrichtung dadurch Signale miteinander austauschen, dass nach der Belegung eines der Übertragungskanäle der Signalbehandlungseinrichtung durch die Datenvermittlungsanlage zunächst während einer zwischen einer der Teilnehmerstellen und der Signalbehandlungseinrichtung aufgebauten ersten Verbindung die zu übertragenden Datensignale in diese Signalbehandlungseinrichtung eingespeichert werden, dass anschliessend nach einer entsprechenden Behandlung die in der Signalbehandlungseinrichtung gespeicherten Datensignale von dieser im Zuge mindestens einer zweiten Verbindung über die Datenvermittlungsanlage an mindestens eine weitere Teilnehmerstelle weitergeleitet werden und dass nach dieser Weiterleitung von der Signalbehandlungseinrichtung her eine dritte Verbindung zu der einen Teilnehmerstelle aufgebaut wird, um dieser das ordnungsgemässe Weiterleiten der Datensignale zu signalisieren.

Es ist bereits ein Verfahren zum Übertragen von Datensignalen zwischen diese Datensignale mit voneinander verschiedenen Datenübertragungsprozeduren abgebenden bzw. aufnehmenden Teilnehmerstellen einer Datenvermittlungsanlage bekannt (DE-OS 32 07 265). Bei diesem bekannten Verfahren wird für eine Signalübertragung zwischen zwei Teilnehmerstellen von der Datenvermittlungsanlage her ein Signalumsetzer belegt, über den im Zuge der zuvor genannten drei Verbindungen die umzusetzenden Datensignale übertragen werden. Der Signalumsetzer bleibt dabei bis zum Abbau der dritten Verbindung belegt, d.h. er ist bis zu diesem Zeitpunkt für eine Einbeziehung in eine weitere Verbindung gesperrt. Die Belegungszeit eines solchen Signalumsetzers kann stark variieren. Sie hängt zum einen von der Anzahl der zu übertragenden Datensignale und zum anderen von dem Zeitpunkt des Zustandekommens der zweiten und dritten Verbindung ab.

In der Zeitschrift «Philips Telecommunication Review», Vol. 39, Nr. 2, Juni 1981, Seiten 49 bis 62 ist ein sogenannter Teletex-Telex-Signalumsetzer beschrieben. Auch bei diesem Signalumsetzer erfolgt die Signalübertragung von einem Teletex-Endgerät zu einem Telex-Endgerät im Zuge dreier gesonderten Verbindungen. Auf Seite 53 ist bezüglich der Signalübertragungsdauer ausgeführt, dass in einigen Fällen Stunden vergehen, ehe die zu übertragenden Signale den Empfänger erreichen. Für diese Zeitdauer wäre dann auch der Teletex-Telex-Signalumsetzer belegt.

Es ist nun Aufgabe der vorliegenden Erfindung, einen Weg zu zeigen, wie bei einem Verfahren der eingangs genannten Art die Belegungsdauer eines Übertragungskanals der Signalbehandlungseinrichtung reduziert werden kann.

Gelöst wird die vorstehend aufgezeigte Aufgabe bei einem Verfahren der eingangs genannten Art erfindungsgemäss dadurch, dass der jeweilige Übertragungskanal bereits vor dem Aufbau der dritten Verbindung für eine erneute Übernahme von zu behandelnden Datensignalen wieder frei gegeben wird und dass die dritte Verbindung über einen für sämtliche Übertragungskanäle gemeinsam zur Verfügung stehenden gesonderten Übertragungskanal aufgebaut wird.

Die Erfindung bringt den Vorteil mit sich, dass die Belegungszeit eines Übertragungskanals der Signalbehandlungseinrichtung zumindest nicht mehr von dem Zeitpunkt des Zustandekommens der dritten Verbindung abhängig ist. Noch während von der Signalbehandlungseinrichtung her versucht wird, eine Verbindung zu derjenigen Teilnehmerstelle hin aufzubauen, von der zuvor die zu übertragenden Datensignale abgegeben worden sind, wird der betreffende Übertragungskanal für eine erneute Datensignalübernahme wieder frei gegeben. Auf diese Weise kann die Anzahl der mit der Datenvermittlungsanlage verbundenen Übertragungskanäle der Signalbehandlungseinrichtung gegenüber der Anzahl der Übertragungskanäle bei einer Einrichtung, deren Übertragungskanäle jeweils erst nach Abbau der dritten Verbindung freigegeben werden, reduziert werden.

Die Belegungsdauer der einzelnen Übertragungskanäle kann dadurch weiter verringert werden, dass den Übertragungskanälen der Signalbehandlungseinrichtung für die Speicherung der im Zuge der ersten Verbindung aufzunehmenden Datensignale jeweils ein Speicherbereich eines eine Mehrzahl derartiger Speicherbereiche aufweisenden Speichers zugeteilt wird, dass nach der Aufnahme von Datensignalen in einen solchen Speicherbereich einem für die Übertragung der Datensignale belegten Übertragungskanal für eine erneute Aufnahme zu behandelnder Datensignale ein weiterer bisher nicht bereits durch Datensignale belegter Speicherbereich zugeteilt wird und dass nach Abbau der ersten Verbindung der im Zusammenhang damit zuvor belegte Übertragungskanal wieder freigegeben wird. Damit ist eine weitere Reduzierung der für Signalbehandlungen mit der Datenvermittlungsanlage verbundenen Übertragungskanäle der Signalbehandlungseinrichtung möglich.

Der im Zusammenhang mit der Freigabe von Übertragungskanälen in der Datenvermittlungsanlage erforderliche Steuerungsaufwand wird besonders niedrig gehalten, wenn für die Freigabe eines Übertragungskanals der Datenvermittlungsanlage ein entsprechendes Freimeldesignal von der Signalbehandlungseinrichtung her zugeführt wird.

Im folgenden wird die Erfindung anhand einer Zeichnung beispielsweise näher beschrieben.

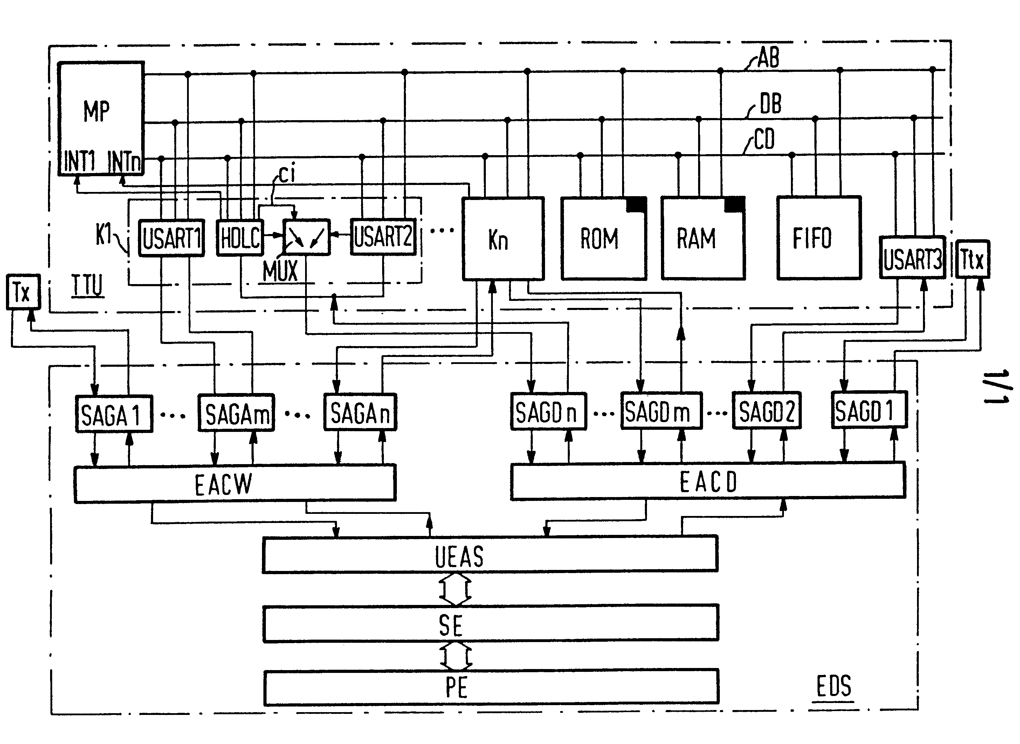

In der Zeichnung ist ausschnittsweise eine bekannte Fernschreib- und Datenvermittlungsanlage EDS dargestellt (siehe «Siemens-Zeitschrift», Heft 2, 1977, Seiten 82 bis 87). Von dieser Fernschreib- und Datenvermittlungsanlage EDS sind lediglich zu einer ersten Gruppe von Anschlussschaltungen gehörende Anschlussschaltungen SAGA1, SAGAm und SAGAn, zu einer zweiten Gruppe von Anschlussschaltungen gehörende Anschlussschaltungen SAGD1, SAGD2, SAGDm und SAGDn, den einzelnen Gruppen von Anschlussschaltungen zugehörige Eingabe/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlussschaltungen dienen dazu, digitale Datensignale polaritätswechselweise zu verarbeiten. Die mit dem anderen Eingabe-/Ausgabe-Codewandler EACD verbundenen Anschlussschaltungen dienen zur Verarbeitung von sogenannten Bitgruppen, die auch als Envelopes bezeichnet werden. Diese Bitgruppen stellen digitale Datensignale dar, die jeweils eine Mehrzahl von Bits umfassen, beispielsweise 8 Bits.

Die Aufgabe der genannten Eingabe-/Ausgabe-Codewandler besteht unter anderem darin, über die einzelnen Anschlussschaltungen zugeführte Signale zu dem eigentlichen Verarbeitungsteil der Fernschreib- und Datenvermittlungsanlage EDS weiterzuleiten bzw. von diesem Verarbeitungsteil her über die Anschlussschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die bestimmte ihr von der Übertragungsablaufsteuerung zugeführte Signale an die Programmsteuereinheit PE weiterleitet. Ausserdem gibt die Speichereinheit SE die ihr von der Programmsteuereinheit zugeführten Signale an die Übertragungsablaufsteuerung UEAS ab.

An die Polaritätswechsel verarbeitenden Anschlussschaltungen sind Teilnehmereinrichtungen anschliessbar, welche digitale Datensignale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx angedeutet ist. Diese Telex-Endgeräte mögen mit einer Datenübertragungsrate von 50 Bd und unter Ausnutzung des internationalen Telegraphenalphabets Nr. 2 arbeiten, also mit einem Start-Stop-Datenformat. Das Telex-Endgerät Tx ist ein- und ausgangsseitig an der Anschlussschaltung SAGA1 angeschlossen. An eine solche Anschlussschaltung sind eine Mehrzahl derartiger Endgeräte anschliessbar; zur Vereinfachung der Zeichnung ist jedoch lediglich der Anschluss eines Endgerätes angedeutet. Eine derartige Vereinfachung gilt auch für die übrigen in der Zeichnung dargestellten Anschlussschaltungen. Anstelle mit Endgeräten kann eine Anschlussschaltung auch mit Übertragungsleitungen verbunden sein, die die Fernschreib- und Datenvermittlungsanlage mit einer weiteren Vermittlungsanlage oder aber, wie im folgenden noch erläutert werden wird, mit Umsetzerkanälen eines Signalumsetzers verbinden.

An die digitale Datensignale in Form von Bitgruppen bzw. Envelopes verarbeitenden Anschlussschaltungen sind Teilnehmereinrichtungen anschliessbar, die digitale Nachrichtensignale mit einer zweiten Datenübertragungsprozedur abgeben bzw. aufnehmen, und zwar seriell in Form von Bitgruppen bzw. Envelopes. Bei diesen Teilnehmereinrichtungen mag es sich um sogenannte Bürofernschreibstationen handeln, die auch als Teletex-Endgeräte bezeichnet werden. In der Zeichnung ist ein derartiges Teletex-Endgerät mit Ttx bezeichnet. Dieses Teletex-Endgerät ist ein- und ausgangsseitig an der Anschlussschaltung SAGD1 angeschlossen. Auch an diese Anschlussschaltung können, wie bereits oben erwähnt, weitere Teletex-Endgeräte oder Übertragungsleitungen angeschlossen sein. Bezüglich der Teletex-Endgeräte sei angemerkt, dass diese beispielsweise seriell auftretende digitale Datensignale entsprechend dem internationalen Alphabet IA Nr. 5 mit einer Datenübertragungsrate von 2400 bit/s abgeben und aufnehmen können, und zwar als synchrone Datensignale.

Mit der in der Zeichnung dargestellten Fernschreib- und Datenvermittlungsanlage EDS ist ein Signalumsetzer TTU verbunden. Dieser Signalumsetzer weist als zentrale Steuerung einen Mikroprozessor MP auf, der mit einem Busleitungssystem verbunden ist. Dieses Busleitungssystem besteht aus einem Adressbus AB, einem Datenbus DB und einem Steuerbus CB. An dieses Busleitungssystem ist eine Mehrzahl von Umsetzerkanälen K1 bis Kn angeschlossen. Diese Umsetzerkanäle weisen einen internen Aufbau auf, wie er für den Umsetzerkanal K1 dargestellt ist. Dieser interne Aufbau entspricht dem internen Aufbau des in der DE-OS 29 12 652 beschriebenen Signalumsetzers. So weist ein Umsetzerkanal für einen externen Anschluss zwei Anschlusseiten auf. Eine erste Anschlussseite wird von einer Schnittstellenschaltung USART1 gebildet, die ein- und ausgangsseitig mit einer Anschlussschaltung der Fernschreib- und Datenvermittlungsanlage EDS verbunden ist. Für den Umsetzerkanal K1 ist dies die Anschlussschaltung SAGAm. Die Schnittstellenschaltung USART1 setzt einerseits die ihr von der Fernschreib- und Datenvermittlungsanlage EDS her zugeführten Signale, bei denen es sich sowohl um Signalisierungsinformationen als auch um Datensignale handeln kann, in parallele Signale um. Andererseits setzt diese Schnittstellenschaltung die ihr von dem Mikroprozessor MP her in paralleler Form zugeführten Signale in serielle Signale um und leitet diese an die Fernschreib- und Datenvermittlungsanlage weiter.

Die zweite Anschlussseite eines Umsetzerkanals ist aus einer Schnittstellenschaltung USART2, einer Datenübertragungsschaltung HDLC und einer Datenweiche MUX gebildet.

Eingangsseitig sind die Schnittstellenschaltung und die Datenübertratungsschaltung mit einem Ausgang einer zu der zweiten Gruppe von Anschlussschaltungen gehörenden Anschlussschaltung der Fernschreib- und Datenvermittlungsanlage EDS verbunden. Für den Umsetzerkanal K1 ist dies die Anschlussschaltung SAGDn. Diese Anschlussschaltung ist eingangsseitig an den Ausgang der gerade erwähnten Datenweiche MUX angeschlossen. Über eine Steuerschaltung $c_i$ erhält diese Datenweiche von der Datenübertragungsschaltung HDLC Steuersignale zugeführt. Diese Steuersignale bewirken, dass entweder der Ausgang der Datenübertragungsschaltung oder der Ausgang der Schnittstellenschaltung USART2 mit dem Ausgang der Datenweiche verbunden ist.

Die gerade genannte Schnittstellenschaltung USART2 dient im wesentlichen der Serien-Parallel-Umsetzung der von der Fernschreib- und Datenvermittlungsanlage her übertragenen Signalisierungsinformationen bzw. der Parallel-Serien-Umsetzung der an die Fernschreib- und Datenvermittlungsanlage abzugebenden Signalisierungsinformationen. Die Datenübertragungsschaltung HDLC dient dagegen zur Datensignalübertragung bei einer bestehenden Verbindung. Die Datensignalübertragung erfolgt dabei nach einer gesicherten Übertragungsprozedur, hier nach der sogenannten HDLC-Prozedur. Bei dieser Prozedur werden zusammen mit den eigentlichen Datensignalen der Sicherung dienende Signale übertragen. Die von der Fernschreib- und Datenvermittlungsanlage übertragenen zusätzlichen Signale werden in der Datenübertragungsschaltung überprüft und von den übrigen Datensignalen abgetrennt. Weitergeleitet werden, wie im folgenden noch erläutert werden wird, lediglich die eigentlichen Datensignale. Den in der Gegenrichtung zu übertragenden Datensignalen, d.h. in Richtung zu der Fernschreib- und Datenvermittlungsanlage hin, werden dagegen von der Datenübertragungsschaltung HDLC der Sicherung dienende Signale angefügt. Die Datenübertragungsschaltung ist schliesslich noch mit einem der Unterbrechungseingänge INT1 bis INTn des Mikroprozessors MP verbunden. Für den Umsetzerkanal K1 ist dies beispielsweise der Unterbrechungseingang INT1.

Wie bereits erwähnt, weisen sämtliche Umsetzerkanäle K1 bis Kn einen internen Aufbau auf, wie er in der Zeichnung für den Umsetzerkanal K1 angegeben ist. Dementsprechend weist auch der in der Zeichnung dargestellte Umsetzerkanal Kn zu der Fernschreib- und Datenvermittlungsanlage hin zwei Anschlussseiten auf. Die eine ·Anschlussseite ist mit der Anschlussschaltung SAGAn der Fernschreib- und Datenvermittlungsanlage verbunden. Die andere Anschlussseite ist an die Anschlussschaltung SAGDm angeschlossen. Schliesslich steht der Umsetzerkanal Kn noch mit dem Unterbrechungseingang INTn des Mikroprozessors MP in Verbindung.

An das Busleitungssystem (AB, DB und CB) des Signalumsetzers TTU ist über entsprechende Leitungen eine Speicheranordnung angeschlossen. Diese Speicheranordnung weist einen Lesespeicher ROM auf, in dem die für den Betrieb des Signalumsetzers TTU von dem Mikroprozessor MP auszuführenden Befehle gespeichert sind, d.h. der Lesespeicher stellt für den Mikroprozessor den Programmspeicher dar. Ausserdem gehört zu der Speicheranordnung ein Schreib-/Lese-Speicher RAM mit wahlfreiem Zugriff. Dieser Schreib-/Lese-Speicher weist eine Mehrzahl von Speicherbereichen auf, die den einzelnen Umsetzerkanälen K1 bis Kn wahlfrei zuteilbar sind. In diese Speicherbereiche werden, wie im folgenden noch erläutert werden wird, von den einzelnen Umsetzerkanälen aufgenommene Datensignale vor einer Umsetzung zwischengespeichert. Schliesslich gehört zu der Speicheranordnung noch ein Durchlaufspeicher FIFO, der zur Zwischenspeicherung von an die Fernschreib- und Datenvermittlungsanlage EDS abzugebenden Meldesignalen dient.

Mit dem Busleitungssystem des Signalumsetzers TTU ist schliesslich noch eine Schnittstellenschaltung USART3 verbunden. Diese Schnittstellenschaltung steht mit der Fernschreib- und Datenvermittlungsanlage EDS über die Anschlussschaltung SAGD2 in Verbindung. Auch diese Schnittstellenschaltung dient im wesentlichen der Serien-Parallel-Umsetzung der von der Fernschreib- und Datenvermittlungsanlage her abgegebenen Signale bzw. zur Parallel-Serien-Umsetzung der an die Fernschreib- und Datenvermittlungsanlage abzugebenden Signale. Bei diesen Signalen handelt es sich sowohl um von dem Signalumsetzer abgegebene Meldesignale als auch um zwischen dem Signalumsetzer und der Fernschreib- und Datenvermittlungsanlage auszutauschende Signalisierungsinformationen.

Nunmehr sei das Verfahren gemäss der Erfindung unter Bezugnahme auf die Zeichnung näher erläutert. Hierzu wird beispielsweise der Fall betrachtet, dass Datensignale von dem Teletex-Endgerät Ttx zu dem Telex-Endgerät Tx zu übertragen sind. Die dabei für einen Verbindungsaufbau erforderlichen Kommunikationen zwischen dem Teletex-Endgerät Ttx und der Fernschreib- und Datenvermittlungsanlage EDS werden entsprechend der CCITT-Empfehlung X.21 durchgeführt. Aus einem im Zuge des Verbindungsaufbaues von dem Teletex-Endgerät her zusammen mit der eigentlichen Rufnummer übertragenen Steuersignal (Zugangskennziffer) geht hervor, dass eine Verbindung zu einem Telex-Endgerät Tx gewünscht ist, d.h. dass eine Umsetzung der Übertragungsprozedur vorzunehmen ist. Ein solches Steuersignal, das in Form eines Bits oder einer Bitkombination übertragen werden kann, wird in der Fernschreib- und Datenvermittlungsanlage EDS als solches erkannt. Bei Erkennen eines Steuersignals belegt die Fernschreib- und Datenvermittlungsanlage einen bis dahin freien Umsetzerkanal K1 bis Kn des Signalumsetzers TTU. Der Umsetzerkanal k1 möge beispielsweise ein solcher freier Umsetzerkanal sein. Die Belegtzustände bzw. Freizustände der einzelnen Umsetzerkanäle des Signalumsetzers werden im übrigen in der Fernschreib- und Datenvermittlungsanlage festgehalten. Hierfür kann beispielsweise eine Registeranordnung vorgesehen sein, wie sie beispielsweise in der DE-OS 30 30 887 angegeben ist. Diese Registeranordnung weist ein Register auf, in dem für jeden Umsetzerkanal der gerade aktuelle Zustand gespeichert ist. Bei der Belegung eines Umsetzerkanals wird beispielsweise ein gespeichertes Freizustandssignal in ein Belegtzustandssignal geändert.

Nach der Belegung des Umsetzerkanals K1 des Signalumsetzers TTU auf ein empfangenes Steuersignal hin leitet die Fernschreib- und Datenvermittlungsanlage EDS die für den weiteren Verbindungsaufbau erforderlichen Signalisierungsinformationen (z.B. Wahlinformationen) an den Umsetzerkanal K1 weiter. Die Weiterleitung solcher Signalisierungsinformationen erfolgt dabei gemäss der CCITT-Empfehlung X.71, d.h. gemäss einer Zwischenamtssignalisierung. Der dabei vorzunehmende Signalaustausch zwischen dem Umsetzerkanal K1 und der Fernschreib- und Datenvermittlungsanlage erfolgt über die Anschlussschaltung SAGDn der Fernschreib- und Datenvermittlungsanlage und über die Schnittstellenschaltung USART2 des Umsetzerkanals K1. Die zugehörige Datenweiche MUX ist dafür von der dem Umsetzerkanal K1 zugehörigen Datenübertragungsschaltung HDLC entsprechend gesteuert. Nach einem erfolgten Aufbau der Verbindung zwischen dem Umsetzerkanal K1 und dem Teletex-Endgerät Ttx beginnt das Teletex-Endgerät mit der Übertragung der Datensignale über die Fernschreib- und Datenvermittlungsanlage zu dem Umsetzerkanal K1. Die Übertragung der Datensignale erfolgt dabei über die Anschlussschaltung SAGDn und die Datenübertragungsschaltung HDLC des Umsetzerkanals K1. Das Auftreten von Datensignalen wird im übrigen dem Mikroprozessor MP des Signalumsetzers TTU von der Datenübertragungsschaltung HDLC angezeigt, und zwar an seinem Unterbrechungseingang INT1.

Wie bereits oben erwähnt, trennt die Datenübertragungsschaltung HDLC von den aufgenommenen Signalen die der Sicherung dienenden Signale von den eigentlichen Datensignalen ab. Lediglich die Datensignale werden an das Busleitungssystem des Mikroprozessors MP in paralleler Form abgegeben. Diese Datensignale werden anschliessend von dem Mikroprozessor in einen dem Umsetzerkanal K1 gerade zugeteilten Speicherbereich des Schreib-/Lese-Speichers RAM eingeschrieben. In diesem Speicherbereich sind im übrigen ausserdem Angaben bezüglich des Empfängers dieser Datensignale, hier des Telex-Endgerätes Tx, eingetragen. Die Zuteilung eines solchen Speicherbereiches erfolgt wahlfrei durch den Mikroprozessor. Hierfür kann beispielsweise in dem Schreib-/Lese-Speicher ein gesonderter Speicherbereich vorgesehen sein, in dem die aktuelle Zuteilung der einzelnen Speicherbereiche auf die Umsetzerkanäle K1 bis Kn festgehalten ist.

Nach dem Einschreiben der über den Umsetzerkanal K1 aufgenommenen Datensignale in den diesem Umsetzerkanal zugeteilten Speicherbereich wird die zwischen dem Umsetzerkanal K1 und der Fernschreib- und Datenvermittlungsanlage bestehende Verbindung in bekannter Weise wieder abgebaut. Ausserdem wird dem Umsetzerkanal K1 ein weiterer nicht durch Datensignale bereits belegter Speicherbereich des Schreib-/Lese-Speichers RAM zugeteilt. Dafür wird ein entsprechender Eintrag in den gesonderten Speicherbereich vorgenommen. Nach der Zuteilung eines solchen Speicherbereiches gibt der Mikroprozessor MP ein Freimeldesignal für den Umsetzerkanal K1 über das Busleitungssystem ab. Dieses Freimeldesignal, das auch den Umsetzerkanal K1 bezeichnet, wird dabei zunächst in den Durchlaufspeicher FIFO eingeschrieben. In diesen Durchlaufspeicher werden im übrigen sämtliche für die Umsetzerkanäle K1 bis Kn abgegebenen Freimeldesignale aufgenommen.

Der Durchlaufspeicher FIFO wird von dem Mikroprozessor MP her in vorgegebenen Zeitabständen für die Abgabe jeweils eines zwischengespeicherten Freimeldesignals angesteuert. Die Abgabe erfolgt dabei in der Reihenfolge des Einschreibens dieser Freimeldesignale. Das bedeutet, dass das für den Umsetzerkanal K1 abgegebene Freimeldesignal gegebenenfalls erst nach einer Anzahl zuvor eingeschriebener Freimeldesignale am Ausgang des Durchlaufspeichers FIFO auftritt. Ein am Ausgang des Durchlaufspeichers auftretendes Freimeldesignal wird nun über die Schnittstellenschaltung USART3 zu der Anschlussschaltung SAGD2 der Fernschreib- und Datenvermittlungsanlage hin übertragen. Auf das Auftreten eines derartigen Freimeldesignals hin wird dann in der Fernschreib- und Datenvermittlungsanlage der bis dahin belegte Umsetzerkanal wieder freigegeben. Für den hier betrachteten Fall, bedeutet das, dass bei Auftreten des für den Umsetzerkanal K1 abgegebenen Freimeldesignals der Umsetzerkanal K1 wieder freigegeben wird. Für diese Freigabe wird in dem oben erwähnten Register für den Umsetzerkanal K1 das festgehaltene Belegtzustandssignal wieder in ein Freizustandssignal geändert. Damit steht dieser Umsetzerkanal wieder für eine erneute Einbeziehung in eine Verbindung zur Verfügung.

Für die Weiterleitung der über den Umsetzerkanal K1 übertragenen und in einem diesem Umsetzerkanal zugeteilten Speicherbereich gespeicherten Datensignale wird von dem Mikroprozessor MP des Signalumsetzers TTU her eine Verbindung anhand der gespeicherten Empfängerangaben zu dem Telex-Endgerät Tx hin aufgebaut. Die Übertragung der Signalisierungsinformationen erfolgt dabei über die Schnittstellenschaltung USART1 des Signalumsetzers und über die Anschlussschaltung SAGAm der Fernschreib- und Datenvermittlungsanlage. Nach dem Verbindungsaufbau werden dann die in dem Schreib-/Lese-Speicher RAM für diesen Umsetzerkanal gespeicherten Datensignale ausgelesen und von dem Mikroprozessor in von Telex-Endgeräten verarbeitbare Datensignale umgesetzt. Die umgesetzten Datensignale werden dann über die gerade genannte Verbindung zu dem Telex-Endgerät Tx hin übertragen. Nach der vollständigen Übertragung der zwischengespeicherten Datensignale wird dann die zu dem Telex-Endgerät hin bestehende Verbindung gemäss einer Telex-Signalisierungsprozedur wieder ausgelöst. Nach diesem Auslösen wird dann der Speicherbereich, aus dem die gerade übertragenen Datensignale ausgelesen worden sind, für andere Umsetzerkanäle wieder freigegeben. Diese Freitabe wird dabei in dem gesonderten Speicherbereich des Schreib-/Lese-Speichers RAM festgehalten.

Nach dem vollständigen Abbau der zwischen dem Umsetzerkanal K1 und dem Telex-Endgerät Tx verlaufenden Verbindung wird von dem Mikroprozessor MP her über die Fernschreib- und Datenvermittlungsanlage EDS erneut eine Verbindung zu dem Teletex-Endgerät Ttx aufgebaut. Diese erneut aufgebaute Verbindung dient lediglich dazu, dem betreffenden Teletex-Endgerät das ordnungsgemässe Weiterleiten der Datensignale an das Telex-Endgerät zu quittieren (Quittungsruf). Die Verbindung verläuft dabei über die Schnittstellenschaltung USART3 des Signalumsetzers TTU und die Anschlussschaltung SAGD2 der Fernschreib- und Datenvermittlungsanlage. Über diesen Verbindungsweg werden im übrigen sämtliche von dem Signalumsetzer TTU an die Fernschreib- und Datenvermittlungsanlage abzusetzenden Quittungsrufe übertragen. Die die Schnittstellenschaltung USART3 und die Anschlussschaltung SAGD2 verbindende Übertragungsleitungen, über die ja auch Freimeldesignale übertragen werden, werden damit für einen Quasi-Multiplexbetrieb ausgenutzt.

Vorstehend wurde die Funktionsweise des Signalumsetzers TTU anhand der Signalübertragung über den Umsetzerkanal K1 erläutert. Von den zur Verfügung stehenden Umsetzerkanälen kann jedoch eine beliebige Anzahl gleichzeitig für eine Datensignalübertragung mit der Fernschreib- und Datenvermittlungsanlage EDS in Verbindung stehen. Die einzelnen Übertragungskanäle werden dabei durch den Mikroprozessor MP nach einem vorgegebenen Zyklus nacheinander bearbeitet.

Weist der Signalumsetzer TTU eine Vielzahl von Umsetzerkanälen K1 bis Kn auf, so ist es vorteilhaft, Freimeldesignale und Quittungsrufe getrennt zu übertragen. Hierfür sind dann anstelle der Schnittstellenschaltung USART3 zwei gesonderte Schnittstellenschaltungen vorzusehen, die in entsprechender Weise mit der Fernschreib- und Datenvermittlungsanlage verbunden sind.

Die Weiterleitung der zunächst über einen Umsetzerkanal des Signalumsetzers TTU aufgenommenen Datensignale an ein Telex-Endgerät braucht im übrigen nicht über denselben Umsetzerkanal zu erfolgen. Es kann auch von dem Mikroprozessor MP her ein beliebiger für eine Weiterleitung von Datensignalen gerade nicht benutzter Umsetzerkanal benutzt werden. Hierfür kann beispielsweise in dem Schreib-/Lese-Speicher RAM des Signalumsetzers TTU eine Tabelle mit den für eine Weiterleitung von Datensignalen freien Umsetzerkanälen hinterlegt sein, die ständig aktualisiert wird.

Für die Schaltungselemente des Signalumsetzers TTU können kommerziell erhältliche Bausteine verwendet werden. Für die Schnittstellenschaltungen USART1 und USART2 der Umsetzerkanäle K1 bis Kn sowie für die Schnittstellenschaltung USART3 können Bausteine mit der Bezeichnung 8251A der Firma Intel verwendet werden. Die Datenübertragungsschaltungen HDLC der genannten Umsetzerkanäle können jeweils aus einem Baustein mit der Bezeichnung 8273 der Firma Intel gebildet sein. Die Datenweiche MUX kann eine herkömmliche Multiplexerschaltung sein, wie sie beispielsweise unter der Bezeichnung SN74151 bekannt ist. Der Lesespeicher ROM kann aus Bausteinen mit der Bezeichnung 2732 der Firma Intel und der Schreib-/Lese-Speicher RAM aus Bausteinen mit der Bezeichnung 2185 der Firma Intel aufgebaut sein. Als Durchlaufspeicher FIFO können beispielsweise ein oder mehrere Bausteine des Typs F9403 der Firma Fairchild verwendet werden. Als Mikroprozessor MP kann schliesslich ein solcher des Typs 8085 der Firma Intel eingesetzt werden.

Es sei hier noch darauf hingewiesen, dass für eine Datensignalübertragung zwischen einem Teletex-Endgerät und einem Telex-Endgerät der Fernschreib- und Datenvermittlungsanlage auch aus einer Mehrzahl von Vermittlungseinrichtungen gebildet sein kann, die lediglich den Anschluss eines einzigen Endgerätetyps zulassen. In diesem Fall sind dann in Vermittlungseinrichtungen miteinander verbindende Übertragungsleitungen Umsetzerkanäle eines oder mehrerer Signalumsetzer geschaltet. Mit anderen Worten die Umsetzerkanäle sind dann nur einseitig mit Anschlussschaltungen der betreffenden Vermittlungseinrichtungen verbunden.

Vorstehend wurde das Verfahren gemäss der Erfindung am Beispiel eines Signalumsetzers erläutert. Dieses Verfahren ist jedoch auch allgemein bei Signalbehandlungseinrichtungen anwendbar, in die zu behandelnde Datensignale für eine Behandlung und anschliessende Weiterleitung aufgenommen werden. Eine Behandlung kann dabei in einer Umsetzung und/oder in einer Aufsammlung der weiterzuleitenden Datensignale bestehen. Das Weiterleiten selbst kann an eine oder mehrere Teilnehmerstellen erfolgen.

Bei einer Rundsendeeinrichtung, als Beispiel einer weiteren Signalbehandlungseinrichtung, werden über einen der Übertragungskanäle aufgenommene Datensignale an eine Mehrzahl von Teilnehmerstellen im Zuge einer entsprechenden Anzahl von Verbindungen übertragen. Nach der Weiterleitung der Datensignale an sämtliche in Frage kommenden Teilnehmerstellen wird dann ein bereits oben erwähnter Quittungsruf aufgebaut. In der Rundsendeeinrichtung kann dabei gleichzeitig eine Umsetzung der weiterzuleitenden Datensignale erfolgen, wenn die die Datensignale aufnehmenden Teilnehmerstellen mit einer

anderen Datenübertragungsprozedur arbeitet als die die Datensignale abgebende Teilnehmerstelle.

**Patentansprüche**

1. Verfahren zum Übertragen von Datensignalen zwischen Teilnehmerstellen (Ttx, Tx) einer Datenvermittlungsanlage (EDS), wobei die betreffenden Teilnehmerstellen über eine an der Datenvermittlungsanlage über eine Mehrzahl von Übertragungskanälen (K1 bis Kn) angeschlossene Signalbehandlungseinrichtung (TTU) dadurch Signale miteinander austauschen, dass nach der Belegung eines der Übertragungskanäle (z.B. K1) der Signalbehandlungseinrichtung durch die Datenvermittlungsanlage zunächst während einer zwischen einer der Teilnehmerstellen (Ttx) und der Signalbehandlungseinrichtung (TTU) aufgebauten ersten Verbindung die zu übertragenden Datensignale in diese Signalbehandlungseinrichtung eingespeichert werden, dass anschliessend nach einer entsprechenden Behandlung die in der Signalbehandlungseinrichtung gespeicherten Datensignale von dieser im Zuge mindestens einer zweiten Verbindung über die Datenvermittlungsanlage an mindestens eine weitere Teilnehmerstelle (Tx) weitergeleitet werden und dass nach dieser Weiterleitung von der Signalbehandlungseinrichtung her eine dritte Verbindung zu der einen Teilnehmerstelle (Ttx) aufgebaut wird, um dieser das ordnungsgemässe Weiterleiten der Datensignale zu signalisieren, dadurch gekennzeichnet, dass der jeweilige Übertragungskanal (K1) bereits vor dem Aufbau der dritten Verbindung für eine erneute Übernahme von zu behandelnden Datensignalen wieder freigegeben wird und dass die dritte Verbindung über einen für sämtliche Übertragungskanäle gemeinsam zur Verfügung stehenden gesonderten Übertragungskanal (USART3, SAGD2) aufgebaut wird.

2. Verfahren nach Anspruch 1, dadurch gekennzeichnet, dass den Übertragungskanälen (K1 bis Kn) der Signalbehandlungseinrichtung (TTU) für die Speicherung der im Zuge der ersten Verbindung aufzunehmenden Datensignale jeweils ein Speicherbereich eines eine Mehrzahl derartiger Speicherbereiche aufweisenden Speichers (RAM) zugeteilt wird, dass nach der Aufnahme von Datensignalen in einen solchen Speicherbereich einen für die Übertragung der Datensignale belegten Übertragungskanal (z.B. K1) für eine erneute Aufnahme zu behandelnder Datensignale ein weiterer bisher nicht bereits durch Datensignale belegter Speicherbereich zugeteilt wird und dass nach Abbau der ersten Verbindung der im Zusammenhang damit zuvor belegte Übertragungskanal (K1) wieder freigegeben wird.

3. Verfahren nach Anspruch 2, dadurch gekennzeichnet, dass für die Freigabe eines Übertragungskanals der Datenvermittlungsanlage (EDS) ein entsprechendes Freimeldesignal von der Signalbehandlungseinrichtung (TTU) her zugeführt wird.

**Revendications**

1. Procédé pour transmettre des signaux de données entre des postes d'abonnés (Ttx, Tx) d'une installation (EDS) de commutation de données, selon lequel les postes d'abonnés considérés échangent entre eux des signaux, par l'intermédiaire d'un dispositif (TTU) de traitement des signaux, qui est raccordé à l'installation de commutation de données par l'intermédiaire d'une multiplicité de canaux de transmission (K1 à Kn), grâce au fait qu'après l'occupation de l'un des canaux de transmission (par exemple K1) du dispositif de traitement de signaux par l'installation de commutation de données, les signaux de données devant être transmis sont mémorisés dans ce dispositif de traitement des signaux tout d'abord pendant une première liaison établie entre l'un des postes d'abonnés (Ttx) et le dispositif (TTU) de traitement des signaux, qu'ensuite, après un traitement correspondant, les signaux de données mémorisés dans le dispositif de traitement de signaux, sont retransmis par ce dispositif, au cours d'au moins une seconde liaison, par l'intermédiaire de l'installation de commutation de données, à au moins un autre poste d'abonné (Tx) et qu'après cette retransmission effectuée à partir du dispositif de traitement des signaux, une troisième liaison avec le poste d'abonné (Ttx) est établie afin de signaler à ce dernier la retransmission correcte des signaux de données, caractérisé par le fait que le canal respectif de transmission (K1) est à nouveau libéré avant même l'établissement de la troisième liaison pour une nouvelle prise en charge de signaux de données devant être traités, et que la troisième liaison est établie par l'intermédiaire d'un canal particulier de transmission (USART3, SAGD2) disponible en commun pour tous les canaux de transmission.

2. Procédé suivant la revendication 1, caractérisé par le fait qu'une zone respective d'une mémoire (RAM) contenant une pluralité de telles zones de mémoire, est affectée aux canaux de transmission (K1 à Kn) du dispositif (TTU) de traitement des signaux, pour la mémorisation des signaux de données devant être reçus au cours de la première liaison, qu'après la réception de signaux de données dans une telle zone de mémoire, une autre zone de mémoire, non déjà occupée jusqu'alors par des signaux de données, est affectée à un canal de transmission (par exemple K1) occupé pour la transmission des signaux de données, pour une nouvelle réception de signaux de données devant être traités, et qu'après la suppression de la première liaison, le canal de transmission (K1) occupé antérieurement en rapport avec cette liaison, est à nouveau libéré.

3. Procédé suivant la revendication 2, caractérisé par le fait que pour la libération d'un canal de transmission, un signal correspondant de signalisation d'état libre est envoyé par le dispositif (TU) de traitement des signaux à l'installation (EDS) de commutation des données.

## Claims

1. Method for transmitting data signals between subscriber stations (Ttx, Tx) of a data exchange (EDS), the subscriber stations in question exchanging signals with one another by means of a signal handling device (TTU) connected to the data exchange via a plurality of transmission channels (K1 to Kn) in that, after the seizure of one of the transmission channels (e.g. K1) of the signal handling device by the data exchange, first of all during a first connection established between one of the subscriber stations (Ttx) and the signal handling device (TTU) the data signals to be transmitted are stored in said signal handling device, and in that subsequently, after a corresponding handling, the data signals stored in the signal handling device are forwarded by the latter in the course of at least one second connection via the data exchange to at least one further subscriber station (Tx), and in that, after this forwarding a third connection is established from the signal handling device, to the one subscriber station (Ttx) in order to signal to the latter the proper forwarding of the data signals, characterized in that the respective transmission channel (K1) is released again for a renewed transfer of data signals to be handled already before the establishment of the third connection, and in that the third connection is established via a separate transmission channel (USART3, SAGD2) common to and available to all transmission channels.

2. Method according to Claim 1, characterized in that in each case one memory area of a memory (RAM) having a plurality of such memory areas is assigned to the transmission channels (K1 to Kn) of the signal handling device (TTU) for the storage of the data signals to be received in the course of the first connection, in that, after receiving data signals in such a memory area, a further memory area, histherto not already occupied by data signals, is assigned to a transmission channel (e.g. K1) which is seized for the transmission of the data signals for renewed receiving of data signals to be handled, and in that, after clearance of the first connection, the transmission channel (K1) seized previously in connection therewith is released again.

3. Method according to Claim 2, characterized in that a corresponding release signal is sent to the data exchange (EDS) from the signal handling device (TTU) for the release of a transmission channel.